Europäisches Patentamt

**European Patent Office**

Office européen des brevets

(19)

(11) Publication number: **0 150 990 B1**

(12) # EUROPEAN PATENT SPECIFICATION

(45) Date of publication of patent specification: **27.12.91** (51) Int. Cl.⁵: **F01K 21/04, F02C 3/30**

(21) Application number: **85300468.7**

(22) Date of filing: **24.01.85**

(54) **Process for producing power.**

(30) Priority: **01.02.84 US 576038**

(43) Date of publication of application:
**07.08.85 Bulletin 85/32**

(45) Publication of the grant of the patent:
**27.12.91 Bulletin 91/52**

(84) Designated Contracting States:
**CH DE IT LI NL SE**

(56) References cited:
**EP-A- 0 081 996        DE-A- 2 140 446**
**DE-C- 717 711          DE-C- 718 197**
**FR-A- 2 230 864        GB-A- 863 558**
**GB-A- 1 212 511        US-A- 2 840 182**

(73) Proprietor: **FLUOR CORPORATION**
**3333 Michelson Drive**
**Irvine California 92730(US)**

(72) Inventor: **Rao, Ashok Domalpalli**
**21711 Lake Vista Drive**
**El Toro California 92630(US)**

(74) Representative: **Williams, Trevor John et al**
**J.A. KEMP & CO. 14 South Square Gray's Inn**
**London WC1R 5EU(GB)**

Rank Xerox (UK) Business Services

## Description

This invention relates to a process for producing mechanical energy or electric power in which a combustion turbine is used for conversion of the chemical energy in a fuel.

Description of Prior Art

When a working fluid is used in an engine to produce mechanical energy or electrical power from the chemical energy contained in a fuel, the working fluid is pressurized and, following combustion of the fuel, the energy thus released from the fuel is absorbed into the working fluid. The working fluid with the absorbed energy is then expanded to produce mechanical energy which may in turn be used to drive a generator to produce electrical power. Unconverted energy is rejected in the form of heat, which may be recovered and utilized. The efficiency of the engine is at a maximum when the temperature of the working fluid entering the expansion stage is also at a maximum.

In the case of combustion turbines, air compression is used for the pressurization step and direct combustion of the fuel into the compressed air is the energy addition step. Expansion in the turbine produces the mechanical energy and the unconverted heat is carried off by the turbine exhaust. The efficiency of the combustion turbine is at a maximum when the combustion temperature itself is at a maximum, and this occurs when the fuel is burned in the presence of the pressurized air under stoichiometric conditions, i.e., enough air is present for complete combustion, but without any excess.

When fuel oil is burned with air under stoichiometric conditions, however, the resulting temperature is approximately 2200° C (4000° F), which is in excess of the metalurgical limits of the turbine. As a result, it is necessary to utilize a large excess of air in the combustion step, which acts as a thermal diluent and reduces the temperature of the combustion products to approximately 1090° C (2000° F). The necessity to use a large excess of air under pressure in turn creates a large parasitic load on the system, because compression of the air requires mechanical energy and thus reduces the net power produced from the system, as well as reducing the overall efficiency of the system.

Another disadvantage of existing combustion turbine cycles is that the pressurization step requires compression of air. Compression of a gas is very inefficient, since mechanical energy is required, which is the highest form of energy and degrades into thermal energy. The mechanical energy required for air compression could be reduced by utilizing interstage cooling, that is, by cooling the temperature of the compressed air between successive stages of a multiple stage compression process. However, from an overall cycle efficiency standpoint, interstage cooling can be utilized only if the heat removed from the compressed air in the inter-cooler can be efficiently recovered and utilised. If the heat from interstage cooling is simply rejected to the atmosphere, the overall cycle efficiency is actually decreased, since it results in the consumption of more fuel to compensate for the energy lost through the intercooler. Accordingly, rather than simply rejecting the heat, the high compressor horsepower requirement has been tolerated in the compressed air stream of the usual prior existing gas turbine systems.

Even in the light of the foregoing limitations, it is very desirable to use a combustion turbine engine, because it is able to operate at the highest temperature of engines that use a working fluid to convert chemical energy in a fuel to mechanical energy. However, due to the high exhaust temperature that is inherent to a combustion turbine engine, the efficiency of the cycle is limited, and as a result, the exhaust from the engine is used as the heat source to operate another engine such as a steam turbine to increase the overall efficiency of utilisation of the fuel. Such a system is called a combined cycle system and is widely used in the industry. Another use for the energy contained in the combustion turbine exhaust is to raise superheated steam which is injected back into the combustor of the combustion turbine, see e.g. US Patent 3 978 661. Yet another method is to preheat the air leaving the compressor against the engine exhaust and simultaneously use interstage cooling during compression (see Kent's Mechanical Engineers Handbook, 1950). These systems show high overall efficiencies with respect to the utilisation of the chemical energy contained in a fuel, but as will be explained subsequently herein, are inherently less efficient than the process of the present invention.

The prior combined cycle system could not take full advantage of air-compressor intercooling, because the low level heat rejected in the air compressor intercooler could not be recovered for efficient use. Recently, direct water injection into the air stream as a means of inter-cooling has been proposed. However, there are two disadvantages with this. One is that the temperature of air leaving the inter-cooling step is limited by the dew point temperature of the saturated air. Also, by the direct injection of water into the air in the intercooler, the added water vapor which serves as a thermal diluent needs to be compressed in the successive stages after the inter-cooler, which precludes realizing the full advantage of water vapor substitution as a means of saving compression power.

The steam cycle has an inherent irreversibility since the evaporation of water (steam generation) occurs at a constant temperature, whereas the heat release occurs at varying temperatures. The following diagram shows the heat release curve and the water evaporation line:

As can be seen from the diagram, with steam generation, a small temperature difference between the heat source and heat absorbing fluid cannot be maintained, and this leads to a high irreversibility in the system and hence a lower efficiency.

A combined cycle plant is also expensive since it requires an additional steam turbogenerator, steam drums, surface condenser for condensing steam turbine exhaust, and cooling towers to reject the heat from the surface condenser to the atmosphere.

A steam injected cycle cannot take full advantage of air-compressor inter-cooling for the same reasons as a combined cycle. Also this cycle involves the generation of steam and hence has the same irreversibility associated with it as described for a combined cycle, although eliminating the steam turbogenerator, surface condenser and cooling towers, and reducing the parasitic load of air compression by displacing some of the air with steam. This is an improvement over the water injected cycle described in NASA Report No. TR-981 titled "Theoretical Analysis of Various Thrust-Augmentation Cycles for Turbojet Engines", by B.L. Lundin, 1950, where liquid water is directly injected into the combustor. The injected water displaces some of the diluent air, but there is a tremendous irreversibility associated with this. The evaporation of the liquid water in the combustor uses energy from the fuel at the highest temperature, which results in an overall reduction of efficiency. Also with the water injected cycle, the heat available from the turbine exhaust still remains to be utilized.

The heat used for generation of steam in a steam injected cycle, is of a much higher quality than is desirable. For example, typically for a combustion turbine operating at a pressure ratio of 11, the system pressure required for injection should be at least 13.8 bar absolute (200 psia). The corresponding saturation temperature of the steam is $194^\circ$ C ($382^\circ$ F). This requires a heat source at much higher temperatures and heat only down to $216^\circ$ C ($420^\circ$ F) can be utilized without unreasonable temperature pinches.

The inter-cooled regenerative cycle uses inter-cooling during the air-compression step, and compressed air preheated against the turbine exhaust before the air enters the combustor. The optimum pressure ratio for this cycle is about 6 to 7. The heat released in the inter-cooler is all lost to atmosphere. Also the temperature of gas leaving the air pre-heater is around 260°C (500°F), and the heat contained in these gases is all wasted. All the thermal diluent is compressed, leading to a large parasitic load, which results in an overall poor efficiency for the system.

The present invention provides a process for producing mechanical energy or electric power from a fuel, utilising a combustion turbine in which some or all of the excess air used as thermal diluent is replaced with water vapour. The water vapour is introduced into the system in a very efficient manner, by pumping as a liquid followed by evaporation. Pumping a liquid requires very little mechanical energy compared to gas (air) compression. Also, evaporation of the water is accomplished using low level heat, in a countercurrent humidification operation. The compressed air is cooled during compression and prior to contact with water to take full advantage of humidification of compressed air which subsequently occurs.

There is thus reduced the parasitic load of compressing the diluent air and a more thermally efficient

3

power production cycle is achieved. The humidification of the compressed air also leads to a reduction of nitrogen oxide emissions, which, of course, is a major environmental benefit. Preferably the compressed air is humidified in a thermodynamically efficient manner, using direct contact of the compressed air in a saturator, which permits the air to be humidified with relatively cold water and without the requirement of a steam boiler.

EP-A-0 081 996 discloses a process in accordance with the prior art portion of claim 1. The present invention, as characterised in claim 1, provides even greater improvements in efficiency due to the lower temperature at which the heat is thus rejected from the cycle from the water leaving the saturator before the temperature of the water has been increased by heat exchanged with the compressed air.

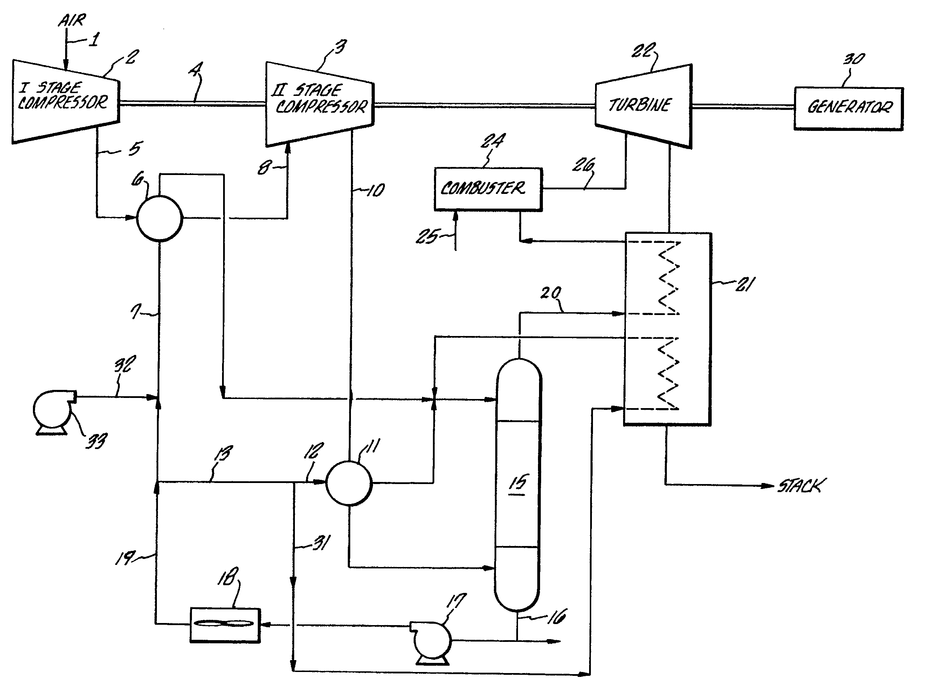

Brief Description of the Drawing

The single figure of drawing is a schematic depiction of the process of the present invention utilizing a two-stage air compressor, axially coupled to a turbine.

Description of Preferred Embodiments

Referring to the Figure of Drawing, air through line 1 is introduced into the first stage of the duel stage air compressor, 2 and 3, which are coupled together axially at 4. The compressed air exiting the first stage of the compressor 2 through line 5 is at a temperature of approximately 187° to 204°C (300° to 400°F) and passes through heat exchanger 6 where it undergoes heat exchange relationship with water passing through line 7. The temperature of the compressed air is thus reduced to approximately 21° to 82°C (70° to 180°F) and thereafter is passed through line 8 to the second stage, 3, of the air compressor.

The compressed air exiting the air compressor through line 10 is at a temperature of approximately 187° to 204°C (300° to about 400°F) and passes through heat exchanger 11 in which it experiences heat exchange with water passing through line 12. The temperature of the compressed air is thus reduced to approximately 46° to 66°C (115° to 150°F).

Water in line 7, following heat exchange in heat exchanger 6, is introduced into the top section of saturator 15 at a temperature of about 187° to 204°C (300° to about 400°F). Within the saturator, the air and water are contacted counter-currently in multi-stages, which improves the thermodynamic efficiency. The operating pressure of the saturator is about 13.8 bar (200 psi), and the water temperature, at that pressure, is approximately 166°C (330°F). The water remaining after vaporization is removed from the bottom of saturator 15 through line 16 and pumped at 17 through air-cooled exchanger 18 and line 19 to either line 7 and heat exchanger 6 or line 13 and 12 to heat exchanger 11, as desired.

The humidified air exits saturator 15 through line 20 as essentially saturated air at approximately 121°C (250°F) and is passed through heat recovery unit 21 in heat exchange relationship with the exhaust from turbine 22 to preheat the saturated air prior to introduction to combustor 24. The fuel for combustion is introduced through line 25 and the combusted gaseous product exits through line 26 to drive turbine 22. The turbine is coupled axially, at 4,.to the air compressor and also to generator 30 for the production of electrical power. While the compressor, turbine and generator are described and illustrated as coupled on a single axle, it will be appreciated that other arrangements may be used, as will be readily understood by those skilled in the art.

Within heat recovery unit 21, the hot exhaust from the gas turbine is passed in heat exchange relationship with water to heat the water to the appropriate temperature for humidification within saturator 15, as illustrated. Thus, water through line 31 may be taken thereby to the heat recovery unit as illustrated. Additionally, of course, makeup water may be added through line 32 by pump 33 as is necessary.

The improved results of this invention are due to the synergism that exists by virtue of having inter-stage cooling and air humidification. Without inter-stage cooling, the temperature of air leaving the compressor would be much higher, around 316° to 427°C (600°F to 800°F) and the heat recovered from the hot compressed air for the humidification would then be of a much higher quality than what would suffice for the humidifier. This use of higher level heat instead of low level heat introduces a large irreversibility and thus reduces the overall efficiency of the system. With interstage cooling, however, the temperature of air leaving the compressor is much lower, around 187° to 204°C (300°F to 400°F) and the heat recovered from this compressed air for humidification constitutes low level heat, which is of the right quality for humidification. The irreversibility in the system is thus minimized, resulting in an overall high efficiency for the system, an efficiency that is significantly higher than any power cycle developed so far. Also, by pre-cooling the compressed air before it enters the countercurrent humidifier the temperature of the water leaving the humidifier is lowered, which makes it possible to recover low level heat from the various sources such as the inter-cooler and from the gases exiting the humidified air pre-heater (in the turbine exhaust).

The process of this invention may be used in conjunction with co-generating facilities, if desired, in which a portion of the heat in the gas turbine exhaust is utilized to generate steam by incorporation of a steam coil and the associated equipment. Thus, as will be appreciated by those skilled in the art, the power cycle of the present invention can be used in integration with a plant producing large quantities of low level heat such as a coal gassification plant or a geothermal facility, or in a facility utilizing reheat turbines. In the latter case, the first turbine would be operated at a high pressure where partial expansion would occur, additional fuel is fired in a second combuster, and the hot gasses are expanded to near atmospheric pressure in the second turbine.

As indicated previously and as will be apparent from the foregoing description, the process of the present invention eliminates the entire steam cycle which would include the steam turbogenerator, steam drums, surface condenser and cooling towers utilized in the combined cycle process. This of course leads to a significant reduction in the capital investment for the process.

Another major advantage of the present process is a significant improvement in thermal efficiency. A comparision of the calculated thermal efficiencies and heat rates for plants utilizing the present process compared to calculated efficiencies and heat rates for a conventional combined cycle plant is set forth in Table 1 which follows. It should be noted that the efficiency of the combined cycle plant is highly sensitive to the size of the plant because of the associated steam cycle. The data published by General Electric Company indicates that efficiency for the combined cycle ranges from about 39.1% to 44.8% for plants ranging in size from 70 MW to 600MW.

## TABLE 1

### COMPARISON BETWEEN THE IMPROVED POWER CYCLE AND COMBINED POWER CYCLE

| Case Designation | 1 | 2 | 3 | 4 | |
|---|---|---|---|---|---|
| Case Description | Improved Cycle Firing Low Sulphur Fuel | Improved Cycle Firing Distillate Fuel Oil | Improved Cycle Integrated With Another Plant | Improved Cycle Using Reheat Turbines | Combined Cycle (70 MW to 600 MW) |
| Thermal Efficiency % of LHV | 49.2 | 48.3 | 71.9* | 53.5 | 39.1 to 44.8 |
| Heat Rate KWH–LHV/KWH (BTU–LHV/KWH) | 2.033 (6944) | 2.070 (7070) | 1.389 (4743)* | 1.869 6382 | 2.556 to 2.233 8730 to 7625 |
| Ratio of Compression Power to Net Power from Gas Turbine $\frac{KW}{KW}$ $(\frac{BHP}{KW})$ | 0.72 (0.96) | 0.78 (1.04) | 0.15 (0.20) | 0.66 (0.88) | 1.25 (1.68) |
| Water Consumption $\frac{LITRE}{KWH}$ $(\frac{GAL}{KWH})$ | 0.96 (0.25) | 0.98 (0.26) | 2.95 (0.78) | 0.68 (0.18) | 1.06 (0.28) |
| Improvement in Heat Rate Over Combined Cycle % | 10 to 26 | 8 to 24 | --- | 20 to 37 | --- |

* Based on fuel energy input alone, i.e. assuming the low level heat is free.

From the foregoing table, it will be appreciated that the improvement in efficiency over a combined cycle plant is significant. The case of a plant utilising reheat turbines in which an efficiency of 53.5% is achieved is in the range of efficiencies for fuel cells, and requiring only mechanical hardware based on existing technology, rather than the development of exotic materials or new chemistry. With higher firing temperatures on the gas turbines, the efficiency of the process would be increased further.

EP 0 150 990 B1

In Table II, comparison of the improved process of this invention to other cycles is shown.

## TABLE II

| | Improved Power Cycle | Combined Cycle | Steam Injected Cycle | Intercooled Regenerative Cycle |
|---|---|---|---|---|
| Thermal Efficiency % | 48-49 | 39-45 | 43 | 38 |
| Heat Rate KWH/KWH (BTU/KWH) | 2.033-2.070 (6944-7070) | 2.233-2.556 (7625-8730) | 2.325 (7940) | 2.629 (8980) |
| Water Consumption Litre/KWH (Gal/KWH) | 0.87-0.96 (0.23-0.25) | 1.06 (0.28) | 1.51 (0.40) | - - |

As can be seen from the preceding table, the efficiency of the cycle is significantly higher than any other cycle.

Appreciation for the improvement in thermal efficiency will be further realized by the following. In a 500 MW power plant, with a combined cycle, the fuel required

$= 9.78 \times 10^9$ KWH/year

$(3.34 \times 10^7$ MMBTU/year)

With the improved cycle, the fuel required

$= 8.90 \times 10^9$ KWH/year

$(3.04 \times 10^7$ MMBTU/year)

Hence, fuel savings in the Improved Power Cycle

$= 9.78 \times 10^9$ KWH/year - $8.90 \times 10^9$ KWH/year

$(3.34 \times 10^7$ MMBTU/year - $3.04 \times 10^7$ MMBTU/year)

$= 0.88 \times 10^9$ KWH/year

$(0.3 \times 10^7$ MMBTU/year)

This corresponds to an annual saving (with fuel cost at $13.64 MWH ($4/MMBTU) of $12 \times 10^6$/year.

The process of the present invention may also be used to convert low level heat from another plant such as a gassification plant or refinery into mechanical energy or electrical power, at a much higher efficiency than other methods. The fuel used in the combustion engine serves to upgrade the recovered low level heat. Thus, for example, when the low level heat recovered by preheating the humidifier circulating water, in the range of 140 to 60°C(300 to 140°F) from a gassification plant is converted to electrical power, the effective efficiency of conversion is as high as approximately 30%.

The thermal efficiency of the process of the present invention has also been compared to the efficiency of the process without intercooler 6, to demonstrate the significance of intercooling to the improvement in efficiency. Thus, the thermal efficiency was found to be only 45%, which is a significant decrease. Also, the thermal efficiency was calculated omitting aftercooler 11 from the process and was found to be essentially unchanged, that is, approximately 49%. Thus, while the aftercooler is useful in reducing the temperature of the compressed air prior to humidification, as described, and in cases where the improved process of this invention is integrated with another plant such as a refinery, as will be appreciated by those skilled in the art, it may be omitted from the process of this invention, if desired.

The efficiency of conversion of such low level heat may be calculated for U.S. Patent No. 4,085,591, "Continuous Flow, Evaporative-Type Thermal Energy Recovery Apparatus and Method for Energy Recovery", where a pressurized gas, e.g. air, is humidified in a spray chamber, and expanded through a gas turbine, to take advantage of the higher specific volume of humidified air. The resulting efficiency with this system is less than 5%. Also there are a number of inherent disadvantages. To produce appreciable amounts of power, very large equipment is required since the system pressure is limiting. This system cannot "upgrade" the recovered low level energy, since it cannot be used in conjunction with a combustion engine.

It will be appreciated from the foregoing description that chemical energy, or low level heat supplemented with chemical energy, may be converted to mechanical energy or electrical power at a very high efficiency. It will also be appreciated that significant environmental benefits will result from the process of the present invention, including conservation of energy resources and reduction in thermal pollution due to the higher efficiency, a reduction in water consumption, particularly as compared to either the combined cycle or the steam injected cycle, and a reduction in nitrogen oxide emissions. With combined cycle plants, steam is injected into the combustor to reduce such emissions, which in turn leads to a decrease in efficiency, which is overcome by the present invention.

In light of the foregoing description, certain variations and modifications of the process of the present invention may become apparent to those skilled in the art. Thus, for example, a plurality of inter-coolers may be used as well as more than two stages of air compression. Also, the inlet air to the compressor may be cooled using a refrigeration system to improve both the efficiency and capacity of the system. The air leaving the inter-cooler may also be further cooled using the refrigeration system and the saturator water may also be precooled, using a refrigeration system, before it enters the inter-cooler. Additionally, saturators of designs other than that illustrated may be used, such as a design where the water would be introduced at a plurality of locations.

## Claims

1. A process for producing power utilising a combustion turbine, comprising humidifying in a saturator compressed air with water, in multistage countercurrent flow prior to combustion, to provide water vapour as thermal diluent for combustion in the combustion turbine, said water being at a temperature below its boiling point at the operating pressure when in contact with said compressed air, said compressed air being passed in heat exchange relationship with said water prior to humidification whereby the temperature of said water is increased and the temperature of said compressed air is decreased, said compressed air being provided by a multiple stage compression step and said heat exchange between said compressed air and water occurring between the stages of said multiple stage compression, characterised in that the water remaining after vaporisation is removed from the saturator and pumped through an air-cooled heat exchanger, whereby heat is rejected from the power production cycle to the atmosphere before the temperature of the water is increased by heat exchange with the compressed air.

2. A process according to claim 1, characterised in that said compressed air, following compression, is further cooled prior to humidification.

3. A process according to claim 2, characterised in that the temperature of said compressed air following said further cooling and prior to humidification is in the approximate range of 46 to 66°C (115 to 150°F).

4. A process according to any preceding claim, characterised in that the temperature of said compressed air is reduced from the approximate range of 149 to 204°C (300° to 400°F) to the approximate range of 21 to 60°C (70 to 140°F by said heat exchange occurring between stages of said multiple stage compression.

5. A process according to any preceding claim, characterised in that the temperature of said compressed air exiting said multiple stage compression is approximately 149° to 204°C (300° to 400°F).

6. A process according to any preceding claim, characterised in that the exhaust from said turbine is passed in heat exchange relationship with said humidified air to preheat the same prior to combustion.

7. A process according to any preceding claim, characterised in that the exhaust from said turbine is passed in heat exchange relationship with water prior to humidification of said compressed air.

8. A process according to claim 1, characterised in that air is compressed in a first air compressor; heat of compression is removed from the air compressed in the first air compressor by collecting the removed heat in a circulating water system; the air is further compressed in a second air compressor; heat of

EP 0 150 990 B1

compression is removed from the air compressed in the second air compressor by further collecting the removed heat in the circulating water system; the air is moistened by feeding the cooled air from the second air compressor and the water from the circulating system containing the removed heat from the first and second air compressions into a countercurrent two phase humidifier to produce water vapour; the water vapour and fuel is fed into a combustion chamber to produce hot combustion gases; and the hot combustion gases are fed to a gas turbine to convert thermal energy to mechanical work, the gas turbine being coupled to a generator for converting mechanical work into electric power and the gas turbine being coupled to the first and second air compressors for compressing the air.

**Revendications**

1. Procédé pour la production d'énergie utilisant une turbine à combustion, comprenant une humidification, dans un saturateur, d'air comprimé avec de l'eau, dans un flux à contre-courant à étages multiples préalablement à la combustion, pour fournir de la vapeur d'eau comme diluant thermique pour la combustion dans la turbine à combustion, ladite eau étant à une température en-dessous de son point d'ébullition à la pression de fonctionnement quand elle est en contact avec ledit air comprimé, ledit air comprimé étant passé en relation d'échange de chaleur avec ladite eau préalablement à l'humidification, grâce à quoi la température de ladite eau est augmentée et la température dudit air comprimé est diminuée, ledit air comprimé étant fourni par une étape de compression à étages multiples, et ledit échange de chaleur entre ledit air comprimé et l'eau ayant lieu entre les étages de ladite compression à étages multiples, caractérisé en ce que l'eau restante après vaporisation est retirée du saturateur et pompée à travers un échangeur de chaleur refroidi à l'air, grâce à quoi la chaleur est rejetée depuis le cycle de production d'énergie vers l'atmosphère avant que la température de l'eau soit augmentée par l'échange de chaleur avec l'air comprimé.

2. Procédé selon la revendication 1, caractérisé en ce que ledit air comprimé, à la suite de la compression, est encore refroidi, préalablement à l'humidification.

3. Procédé selon la revendication 2, caractérisé en ce que la température dudit air comprimé, à la suite dudit refroidissement supplémentaire et préalablement à l'humidification, est dans le domaine approximatif de 46 à 66° C (115 à 150° F).

4. Procédé selon l'une quelconque des revendications précédentes, caractérisé en ce que la température dudit air comprimé est réduite du domaine approximatif de 149 à 204° C (300 à 400° F) au domaine approximatif de 21 à 60° (70 à 140° F) par ledit échange de chaleur ayant lieu entre les étages de ladite compression à étages multiples.

5. Procédé selon l'une quelconque des revendications précédentes, caractérisé en ce que la température dudit air comprimé sortant de ladite compression à étages multiples est approximativement de 149 à 204° C (300 à 400° F).

6. Procédé selon l'une quelconque des revendications précédentes, caractérisé en ce que l'échappement de ladite turbine est amené en relation d'échange de chaleur avec ledit air humidifié pour le préchauffer préalablement à la combustion.

7. Procédé selon l'une quelconque des revendications précédentes, caractérisé en ce que l'échappement de ladite turbine est amené en relation d'échange de chaleur avec l'eau préalablement à l'humidification dudit air comprimé.

8. Procédé selon la revendication 1, caractérisé en ce que l'air est comprimé dans un premier compresseur d'air; la chaleur de compression est évacuée de l'air comprimé dans le premier compresseur d'air en collectant la chaleur évacuée dans un système à circulation d'eau; l'air est ensuite comprimé dans un second compresseur d'air; la chaleur de compression est évacuée de l'air comprimé dans le second compresseur d'air en collectant à nouveau la chaleur évacuée dans le système à circulation d'eau; l'air est humidifié en introduisant l'air refroidi du second compresseur d'air et l'eau du système à circulation d'eau contenant la chaleur évacuée des première et seconde compressions dans un humidificateur à deux phases et à contre-courant pour produire de la vapeur d'eau; la vapeur d'eau et le combustible sont introduits dans une chambre de combustion pour produire des gaz chauds de combustion; et les

9

gaz chauds de combustion sont introduits dans une turbine à gaz pour convertir l'énergie thermique en travail mécanique, la turbine à gaz étant couplée à un générateur pour convertir le travail mécanique en énergie électrique, et la turbine à gaz étant couplée aux premier et second compresseurs d'air pour comprimer l'air.

**Patentansprüche**

1. Verfahren zur Leistungsproduktion unter Verwendung einer Verbrennungsturbine, bei dem in einem Saturator verdichtete Luft mit Wasser in mehrstufigem Gegenstrom vor der Verbrennung angefeuchtet wird, um Wasserdampf als thermisches Verdünnungsmittel für die Verbrennung in der Verbrennungsturbine zur Verfügung zu stellen, wobei das Wasser während des Kontakts mit der verdichteten Luft eine Temperatur hat, die niedriger ist als sein Siedepunkt beim Arbeitsdruck, und die verdichtete Luft vor der Anfeuchtung unter Wärmeaustausch mit dem Wasser geführt wird, wodurch die Temperatur des Wassers erhöht und die der verdichteten Luft vermindert wird, bei dem weiter die verdichtete Luft in einem mehrstufigen Verdichtungsschritt bereitgestellt wird und der Wärmeaustausch zwischen der verdichteten Luft und Wasser zwischen den Stufen der mehrstufigen Verdichtung stattfindet, dadurch gekennzeichnet, daß das nach der Verdampfung verbliebene Wasser aus dem Saturator entfernt und durch einen luftgekühlten Wärmetauscher gepumpt wird, wodurch Wärme aus dem Leistungsgewinnungsprozeß an die Atmosphäre abgegeben wird, bevor die Temperatur des Wassers durch Wärmetausch mit der verdichteten Luft erhöht wird.

2. Verfahren nach Anspruch 1, dadurch gekennzeichnet, daß die verdichtete Luft nach der Verdichtung, vor der Anfeuchtung weiter gekühlt wird.

3. Verfahren nach Anspruch 2, dadurch gekennzeichnet, daß die Temperatur der verdichteten Luft nach dieser weiteren Kühlung und vor der Anfeuchtung etwa im Temperaturbereich zwischen 46 und 66° C (115 und 150° F) liegt.

4. Verfahren nach einem der vorhergehenden Ansprüche, dadurch gekennzeichnet, daß die Temperatur der verdichteten Luft durch den Wärmeaustausch, der zwischen den Stufen der mehrstufigen Verdichtung stattfindet, vom ungefähren Bereich zwischen 149 und 204° C (300 bis 400° F) auf den ungefähren Bereich zwischen 21 und 60° C (70 bis 140° F) reduziert wird.

5. Verfahren nach einem der vorhergehenden Ansprüche, dadurch gekennzeichnet, daß die Temperatur der aus der mehrstufigen Verdichtung austretenden verdichteten Luft etwa 149 bis 204° C (300 bis 400° F) beträgt.

6. Verfahren nach einem der vorhergehenden Ansprüche, dadurch gekennzeichnet, daß das Abgas aus der Turbine unter Wärmeaustausch mit der angefeuchteten Luft geführt wird, um diese vor der Verbrennung vorzuwärmen.

7. Verfahren nach einem der vorhergehenden Ansprüche, dadurch gekennzeichnet, daß das Abgas der Turbine vor dem Anfeuchten der verdichteten Luft unter Wärmeaustausch mit Wasser geführt wird.

8. Verfahren nach Anspruch 1, dadurch gekennzeichnet, daß Luft in einem ersten Luftverdichter verdichtet wird, daß die Wärme aus der Verdichtung von der im ersten Verdichter verdichteten Luft abgeführt wird, indem die abgeführte Wärme in einem Wasserumlaufsystem gesammelt wird, daß die Luft in einem zweiten Luftverdichter weiter verdichtet wird, daß die Verdichtungswärme von der im zweiten Luftverdichter verdichteten Luft durch weiteres Sammeln der abgeführten Wärme in dem Wasserumlaufsystem abgeführt wird, daß die Luft durch das Einleiten der gekühlten Luft aus dem zweiten Luftverdichter und des Wassers aus dem Umlaufsystem, das die aus der ersten und zweiten Verdichtung abgeführte Wärme enthält, in einen zweistufigen Gegenstrombefeuchter angefeuchtet wird, um Wasserdampf zu produzieren, daß der Wasserdampf und Brennstoff in eine Verbrennungskammer eingeleitet werden, um heiße Verbrennungsgase zu produzieren, und daß die heißen Gase in eine Gasturbine eingeleitet werden, um thermische Energie in mechanische Arbeit umzuwandeln, wobei die Gasturbine sowohl an einen Generator zum Umwandeln von mechanischer Arbeit in elektrische Energie als auch an den ersten und zweiten Luftverdichter zum Verdichten der Luft gekuppelt ist.